Europäisches Patentamt

European Patent Office

Office européen des brevets

(11) Veröffentlichungsnummer: **0 198 360 B1**

# (12) EUROPÄISCHE PATENTSCHRIFT

(45) Veröffentlichungstag der Patentschrift: **22.07.92**

(21) Anmeldenummer: **86104629.0**

(22) Anmeldetag: **04.04.86**

(51) Int. Cl.⁵: **H04M 19/08**

(54) Schaltungsanordnung für die Fernspeisung von Teilnehmeranschluss-Endgeräten in Fernmeldeanlagen.

(30) Priorität: **16.04.85 DE 3513625**

(43) Veröffentlichungstag der Anmeldung:
**22.10.86 Patentblatt 86/43**

(45) Bekanntmachung des Hinweises auf die
Patenterteilung:
**22.07.92 Patentblatt 92/30**

(84) Benannte Vertragsstaaten:
**DE FR GB IT NL SE**

(56) Entgegenhaltungen:
**EP-A- 0 160 411**
**FR-A- 2 262 455**
**FR-A- 2 266 391**
**FR-A- 2 282 198**

**IBM TECHNICAL DISCLOSURE BULLETIN,**
**Band 25, Nr. 11A, April 1983, Seiten**
**5798,5799, New York, US; D. BALLATORE:**
**"Two-slope resistive feeder for telephone**
**line interface circuits"**

(73) Patentinhaber: **Siemens Nixdorf Informations-**
**systeme Aktiengesellschaft**
**Fürstenallee 7**
**W-4790 Paderborn(DE)**

(72) Erfinder: **Schreiber, Harald**
**Strandasterweg 7**
**W-4796 Salzkotten(DE)**

(74) Vertreter: **Fuchs, Franz-Josef, Dr.-Ing. et al**
**Postfach 22 13 17**
**W-8000 München 22(DE)**

## Beschreibung

Die Erfindung betrifft eine Schaltungsanordnung für die Fernspeisung von Teilnehmeranschluß-Endgeräten in Fernmeldeanlagen, insbesondere Fernsprech-Nebenstellenanlagen, aus einer zentralen Stromquelle über eine Speiseschaltung und die Teilnehmeranschlußleitung.

Es ist bereits bekannt, in Fernmeldeanlagen über die Teilnehmeranschlußleitung nicht nur den Teilnehmerapparat selbst, sondern auch Zusatzgeräte mit Strom zu versorgen. Außer Informationssignalen wird also über die Teilnehmeranschlußleitung auch ein Speisegleichstrom für ein Endgerät übertragen, wozu am Anfang und Ende der Teilnehmeranschlußleitung zum Einkoppeln bzw. Auskoppeln der Informationssignale besondere Trennschaltungen vorgesehen sind.

In modernen Fernmeldeanlagen, insbesondere in digital arbeitenden Fernsprech-Nebenstellenanlagen werden an den Teilnehmeranschlüssen zunehmend intelligente Endgeräte eingesetzt, die mit Mikroprozessoren ausgerüstet sind. Solche Endgeräte sind beispielsweise digitale FernsprechTeilnehmerstationen, Datendrucker, Sichtgeräte usw. Diese Endgeräte wurden bisher direkt aus dem Stromversorgungsnetz gespeist, da ihr Betrieb eine vorgegebene Versorgungsspannung erfordert, die möglichst wenig Schwankungen unterworfen sein soll, um eine ordnungsgemäße Funktion bzw. stabile Arbeitsweise zu sichern. Eine Fernspeisung solcher Endgeräte über die Teilnehmeranschlußleitung erscheint nach bisherigen Schaltungskonzepten FR-A-2262 455 nicht zweckmäßig, weil infolge der elektrischen Werte der in Fernmeldeanlagen verwendeten Leitungen Strom- bzw. Spannungsschwankungen insbesondere beim Anschalten eines derartigen Speisesystems an die zentrale Stromquelle zu unkontrollierten Ein- und Abschaltevorgängen führen können, durch die einerseits Fehler bei der Übertragung und Auswertung der Informationssignale verursacht werden können, andererseits infolge stark schwankender Speiseströme schädliche Nebenwirkungen auf andere Komponenten der Fernmeldeanlage erzeugt werden können, die gleichfalls zu unkontrollierten Betriebszuständen führen können.

Will man dennoch eine Fernspeisung von Teilnehmeranschluß-Endgeräten über die Teilnehmeranschlußleitung verwirklichen, so müssen Forderungen realisiert werden, die sich aus dem speziellen Einsatz einer Stromversorgung über die Teilnehmeranschlußleitung ergeben. Eine erste Forderung besteht darin, im Hinblick auf die begrenzte Belastungsfähigkeit einer Teilnehmeranschlußleitung die Stärke eines über sie geführten Speisestroms relativ gering zu halten, wozu das Gesamtsystem einen optimalen Wirkungsgrad haben sollte. Dabei muß aber einerseits Kurzschlußfestigkeit, andererseits Überlastungsfestigkeit des Systems gewährleistet sein, denn diese beiden Betriebszustände können bei Fernmeldeanlagen infolge der gegenüber einer Netzstromversorgung relativ hohen Leitungswiderstände oft eintreten. Diese Leitungswiderstände führen dazu, daß Einschaltvorgänge beim Anschalten eines Endgeräts an eine Teilnehmeranschlußleitung übermäßig starke Einschaltströme auf der Teilnehmeranschlußleitung produzieren, wodurch auf dieser so hohe Spannungsabfälle erzeugt werden, daß das angeschaltete Endgerät sich infolge zu geringer Betriebsspannung wieder von der Teilnehmeranschlußleitung abschaltet.

Es sollten also Mittel zum Vermeiden derartiger Schaltzustände vorgesehen sein. Schließlich sollten aber auch jegliche Erdschleifen im System vermieden werden, da diese zur Beeinträchtigung der Informationssignalübertragung führen können.

Es ist Aufgabe der Erfindung, eine Fernspeisung von Teilnehmeranschluß-Endgerätenunter Berücksichtigung der vor-stehend aufgezeigten Forderungen in möglichst einfacher Weise zu verwirklichen, wobei unterschiedlichste Speisespannungen und Leitungssysteme verwendbar sein sollen.

Diese Aufgabe wird für eine Schaltungsanordnung eingangs genannter Art erfindungsgemäß dadurch gelöst, daß dem Endgerät am Teilnehmeranschluß ein Stromwandler mit einem primärseitigen, mit der Teilnehmeranschlußleitung direkt verbundenen und die für einen Einschaltvorgang des Stromwandlers erforderliche Energie liefernden Energiespeicher vorgeschaltet ist und daß die Speiseschaltung Komponenten enthält, die bei Überschreiten eines vorgegebenen Speisestromwerte eine Verringerung des Speisestroms durch Innenwiderstandsänderung bewirken.

Die Erfindung löst die gestellte Aufgabe mit Maßnahmen am Anfang und am Ende der Teilnehmeranschlußleitung. Dem Endgerät ist ein Stromwandler vorgeschaltet, mit dem ein hoher Wirkungsgrad der Fernspeisung erreicht werden kann. Um eine übermäßige Strombelastung der Teilnehmeranschlußleitung zu vermeiden, ist auf der Primärseite des Stromwandlers, also in Verbindung mit der Teilnehmeranschlußleitung, ein Energiespeicher vorgesehen, der beim Einschalten des Stromwandlers dessen vorübergehend hohen Strombedarf deckt. Ein solcher Energiespeicher kann vorteilhaft durch eine Kapazität gebildet sein. Die Maßnahme am Anfang der Teilnehmeranschlußleitung besteht in der Ausrüstung der Speiseschaltung mit Komponenten, die bei Überschreiten eines vorgegebenen Speisestroms eine Innenwiderstand sänderung hervorrufen. Dadurch ist die Möglichkeit gegeben, die Strombelastung der Teilnehmeranschlußleitung von vornherein ihrer Länge und ihrem Leitungswiderstand entsprechend zu begrenzen, ohne daß durch übermäßig starken Stromfluß die Speisespannung auf der Teilnehmeranschlußleitung unzulässig stark absinkt. Der geänderte Innenwiderstand der Speiseschaltung führt dazu, daß bei Überschreiten eines vorgegebenen Speisestromwertes eine Rückführung auf niedrigere Speisestromwerte erfolgt, die einen Zusammenbruch der Speisespannung auf der Teilnehmeranschlußleitung verhindert. In Wechselwirkung mit dieser Strombegrenzung übernimmt der Energiespeicher auf der Primärseite des Stromwandlers am Ende der Teilnehmeranschlußleitung die Aufgabe der vorübergehend hohen Stromlieferung.

Die Speisung des Endgeräts erfolgt erdfrei, denn in dem dem Endgerät vorgeschalteten Stromwandler ist ein Wandlerübertrager vorgesehen, der die Teilnehmeranschlußleitung von dem Endgerät galvanisch trennt.

Diese vorteilhaften Eigenschaften einer Schaltungsanordnung nach der Erfindung können weiter verbessert werden, indem ein Schaltstromwandler mit ausgangsspannungsabhängiger Regelung seiner Schaltcharakteristik vorgesehen ist, wobei die Bildung der Steuergröße für die Regelung bei Einschalten des Schaltstromwandlers mit einer Anstiegsflanke endlicher Steigung erfolgt, die so bemessen ist, daß der vorgegebene Speisestromwert nicht überschritten wird.

Wenn die Steuergröße für die Regelung des Schaltstromwandlers, deren Wert von der Ausgangsspannung des Schaltstromwandlers abgeleitet ist, mit einer Anstiegsflanke beschriebener Art versehen wird, so wird dadurch ein sogenannter weicher Start des Schaltstromwandlers erreicht, der einen übermäßig hohen Strombedarf beim Einschalten vermeidet, so daß der zur Lieferung dieses Strombedarfs vorgesehene Energiespeicher relativ klein ausgeführt werden kann. Die Bemessung der Anstiegsflanke der Steuergröße für die Regelung derart, daß der vorgegebene Speisestromwert nicht überschritten wird, erfolgt dabei abhängig von der Größe des Energiespeichers.

Besonders vorteilhaft läßt sich das vorstehend erläuterte Prinzip des weichen Starts des Schaltstromwandlers verwirklichen, wenn zur Regelung der Schaltcharakteristik eine spannungsgesteuerte Pulsbreitenmodulation der Schaltimpulse für den primärseitigen Schaltstromkreis des Schaltstromwandlers erfolgt und der Steuerstromkreis für die Spannungssteuerung einen RC-Verzögerungsstromzweig aufweist. Ein Spannungsanstieg mit entsprechend dem Energiespeicher bemessener Steigung kann nämlich in sehr einfacher Weise durch mit der Spannungssteuerung gekoppelte Verzögerung des anfänglichen Spannungsanstiegs mittels eines RC-Gliedes erfolgen, dessen Spannungsverlauf an der Kapazität beim Aufladevorgang der Steuerspannung für die Pulsbreitenmodulation einfach überlagert wird.

Hierbei kann zweckmäßig nach demselben Prinzip eine Begrenzung der Pulsbreitenmodulation auf eine vorgegebene maximale Pulsbreite vorgesehen werden, durch die vermieden werden kann, daß der Wandlerübertrager in den magnetischen Sättigungszustand gelangt. Auch diese Maßnahme trägt zur Begrenzung der Strombelastung der Teilnehmeranschlußleitung bei.

Vorteilhaft enthält der Schaltstromwandler primärseitig eine an der Eingangsspannung liegende Schwellenschaltung, deren Schaltschwelle das Einschaltkriterium für die primärseitigen Schaltimpulse ist. Hierdurch wird erreicht, daß beim Anschalten einer Teilnehmeranschlußleitung an eine zentrale Stromquelle die Eingangsspannung für den Stromwandler zunächst auf einen vorgegebenen Wert steigen muß, um den Stromwandler dann durch Einschaltung der primärseitigen Schaltimpulse anlaufen zu lassen. Dies bedeutet, daß die elektrische Spannung am Energiespeicher, der gleichfalls auf der Primärseite des Stromwandlers vorgesehen ist, zuerst einen vorgegebenen Wert erreicht haben muß, bevor die Belastung durch den Start des Stromwandlers erfolgt.

Die erfindungsgemäßen Maßnahmen führen zu einer Fernspeisung von Teilnehmeranschluß-Endgeräten, bei der Strom- und Spannungsschwankungen sowie entsprechende Extremwerte vermieden werden. Die Auswirkung der Erfindung zeigt sich nicht nur beim Einschalten der Fernspeisung, sondern auch bei Ausgleichsvorgängen anderer Art, die Strom- und Spannungsschwankungen auf der Teilnehmeranschlußleitung infolge äußerer Einwirkung erzeugen können. Auch solche Schwankungen werden durch ein erfindungsgemäß aufgebautes System aufgefangen. Ein wesentlicher Vorteil der Erfindung besteht außerdem darin, daß das Prinzip bei Leitungskonzepten unterschiedlichster Art eingesetzt werden kann, also insbesondere bei Zweidrahtleitungen und Vierdrahtleitungen.

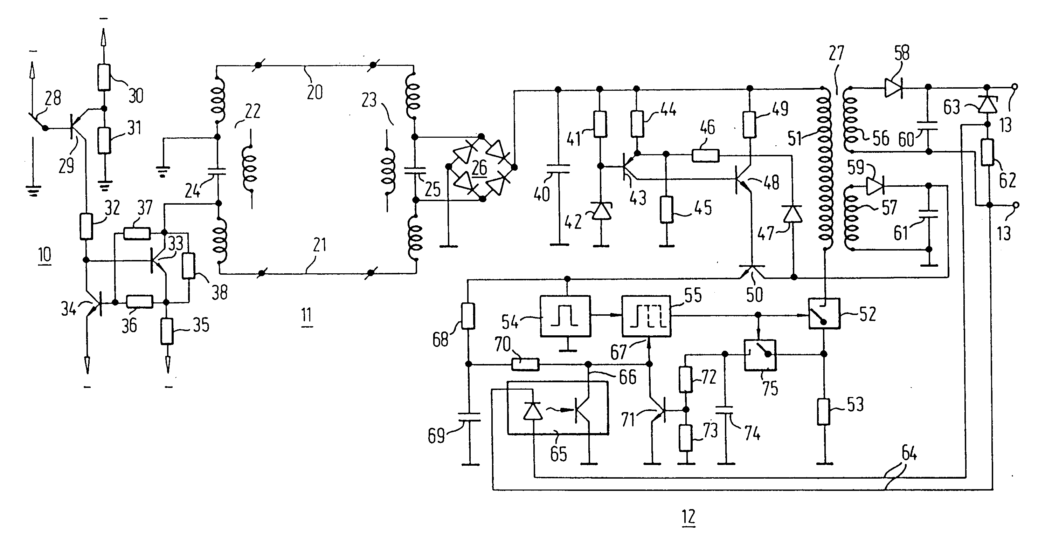

Ein Ausführungsbeispiel der Erfindung wird im folgenden an Hand der Figur beschrieben, die eine Schaltungsanordnung zur Fernspeisung eines Teilnehmeranschluß-Endgeräts mit zentraler Speiseschaltung, Teilnehmeranschlußleitung und Stromwandlerschaltung zeigt.

In der Figur ist eine Schaltungsanordnung für die Fernspeisung eines Teilnehmeranschluß-Endgeräts dargestellt, die beispielsweise innerhalb einer Fernsprech-Nebenstellenanlage eingesetzt wird und als wesentliche Bestandteile eine Speiseschaltung 10, eine Teilnehmeranschlußleitung 11 und eine Stromwandlerschaltung 12 hat, die an ihrem Ausgang 13 die Speisespannung für ein Endgerät abgibt. Die Speiseschaltung 10 ist zentral angeordnet und wird aus einer zentralen Stromquelle gespeist, die mit negativer Betriebsspannung gegen Erde versorgt wird. Die Speiseschaltung 10 ist an die beiden Adern 20 und 21 der Teilnehmeranschlußleitung 11 über einen Speiseübertrager 22 angeschlossen, der in bekannter Weise die Stromversorgung mit den Informationssignalen an der Teilnehmeranschlußleitung 11 zusammenführt. Am Ende der Teilnehmeranschlußleitung 11 ist ein Trennübertrager 23 vorgesehen, der die Informationssignale von der Stromversorgung trennt, so daß sie in hier nicht weiter dargestellter Weise verarbeitet werden können. Zur gegenseitigen galvanischen Entkopplung der beiden Adern 20 und 21 der Teilnehmeranschlußleitung 11 dient an deren Anfang und Ende jeweils ein Kondensator 24 bzw. 25.

Die Teilnehmeranschlußleitung 11 ist mit der Wandlerschaltung 12 über eine aus vier Gleichrichterdioden bestehende Schutzschaltung 26 verbunden, die als Verpolungsschutz für die Wandlerschaltung 12 dient. Die Wandlerschaltung 12 enthält als galvanisches Trennelement einen Wandlerübertrager 27, durch den die am Ausgang 13 abgegebene Speisespannung für ein Endgerät gegenüber der Primärseite bzw. der Teilnehmeranschlußleitung entkoppelt, also erdfrei ist.

Die Speiseschaltung 10 ist durch ein zentrales Schaltsignal einschaltbar, dessen Auswirkung in der Figur durch einen geschlossenen Schalter 28 dargestellt ist, der die Basis eines Transistors 29 mit der Betriebsspannung verbindet. Der Emitter des Transistors 29 liegt an einem aus zwei Widerständen 30 und 31 gebildeten Spannungsteiler, der aus der Betriebsspannung eine Emitterspannung ableitet. Der Kollektor des Transistors 29 ist über einen Widerstand 32 mit der Basis eines Transistors 33 sowie mit dem Kollektor eines Transistors 34 verbunden, der an seinem Emitter mit der Betriebsspannung verbunden ist. Der Transistor 33 ist an seinem Kollektor mit der Ader 21 der Teilnehmeranschlußleitung verbunden und liegt über einen Emitterwiderstand 35 an der Betriebsspannung. Außerdem ist die Basis des Transistors 34 über einen Widerstand 36 mit dem Emitter und über einen Widerstand 37 mit dem Kollektor des Transistors 33 verbunden. Parallel zur Emitter-Kollektorstrecke des Transistors 33 liegt ein Widerstand 38.

Als Energiespeicher auf der Primärseite des Stromwandlers 12 dient ein Kondensator 40, der zwischen den positiven Anschluß der Diodenschaltung 26 und Masse geschaltet ist. Dem Kondensator 40 ist die Reihenschaltung eines Widerstands 41 und einer Zenerdiode 42 parallelgeschaltet. Die Zenerdiode 42 wird durch die von der Diodenschaltung 26 abgegebene und über die Teilnehmeranschlußleitung 11 zugeführte Gleichspannung über den Widerstand 41 in Sperrrichtung beaufschlagt.

Die an der Zenerdiode 42 abfallende Zenerspannung ist Basisspannung für einen Transistor 43, der seine Emitterspannung über einen Spannungsteiler aus zwei Widerständen 44 und 45 erhält. Ferner wird dem Emitter dieses Transistors 43 eine Gleichspannung über einen Widerstand 46 und eine Diode 47 zugeführt, die mit der Sekundärseite des Wandlerübertragers 27 verbunden ist. Der Kollektor des Transistors 43 ist direkt mit der Basis eines Transistors 48 verbunden, der seine Kollektorspannung über einen Widerstand 49 aus der Eingangsspannung des Stromwandlers erhält und über seinen Emitter einen Transistor 50 an dessen Basis steuert, der an seinem Kollektor wie die Diode 47 mit der Sekundärseite des Wandlerübertragers 27 verbunden ist.

Die Primärwicklung 51 des Wandlerübertragers 27 liegt mit ihrem einen Ende an der positiven Eingangsspannung des Stromwandlers und mit ihrem anderen Ende über einen elektronischen Schalter 52 und einen Widerstand 53 an Masse. Der elektronische Schalter 52 wird in noch zu beschreibender Weise durch die Schaltimpulse eines Impulsgenerators 54 periodisch geschaltet, nachdem diese Schaltimpulse einen Pulsbreitenmodulator 55 durchlaufen haben.

Der Wandlerübertrager 27 hat zwei Sekundärwicklungen 56 und 57, die jeweils über eine Diode 58 bzw. 59 eine pulsierende Spannung abgeben, die einen Kondensator 60 bzw. 61 lädt, so daß an diesem eine Gleichspannung auftritt, die bei Ableitung aus der Sekundärwicklung 56 am Ausgang 13 des Stromwandlers als Speisespannung für das Endgerät dient und bei Ableitung aus der Sekundärwicklung 57 über den Transistor 50 den Impulsgenerator 54 betreibt.

Dem Kondensator 60 ist die Reihenschaltung eines Widerstands 62 und einer Zenerdiode 63 parallelgeschaltet. An dem Widerstand 62 tritt eine Gleichspannung auf, die über eine Leitung 64 als Regelspannung einem Regelkreis zugeführt wird, um die am Ausgang 13 abgegebene Speisespannung durch Spannungssteuerung am Pulsbreitenmodulator 55 und entsprechende Steuerung der Betriebsweise des elektronischen Schalters 52 weitgehend konstant zu halten, wie dies für Schaltstromwandler der hier betrachteten Art bekannt ist.

Der Regelkreis enthält einen Optokoppler 65, der die ihm über die Leitungen 64 zugeführte Gleichspannung in eine Steuerspannung für den Pulsbreitenmodulator 55 umsetzt und diese an seinem Ausgang 66 abgibt, wodurch sie auf den Steuereingang 67 des Pulsbreitenmodulators 55 gelangt. Dieser Steuerspannung wird ferner eine Gleichspannung überlagert, die aus der Betriebsspannung für den Impulsgenerator 54 abgeleitet und an einer RC-Reihenschaltung aus einem Widerstand 68 und einem Kondensator 69 abgegriffen und über einen Widerstand 70 geführt ist. Der Steuereingang 67 des Pulsbreitenmodulators 55 ist ferner mit der Kollektor-Emitterstrecke eines Transistors 71 verbunden, dessen Emitter an Masse liegt. Die Basis liegt am Abgriff eines Spannungsteilers aus zwei Widerständen 72 und 73, dem ein Kondensator 74 parallelgeschaltet ist. Diese Anordnung wird über einen elektronischen Schalter 75, gleichfalls gesteuert durch die von dem Pulsbreitenmodulator 55 abgegebenen Schaltimpulse, periodisch mit der Spannung verbunden, die an dem Widerstand 53 beim periodischen Einschalten des elektronischen Schalters 52, also des Primärstromkreises des Stromwandlers, abfällt.

Im folgenden wird nun die Arbeitsweise der Gesamtanordnung beschrieben, wozu zunächst die Funktion der Speiseschaltung 10 erläutert wird. Wenn die Speiseschaltung 10 durch Betätigen des Schalters 28 eingeschaltet wird, so wird dadurch die Basis des Transistors 29 mit der Betriebsspannung verbunden. Dadurch wird der Transistor 29 leitend und liefert über den Widerstand 32 einen Basisstrom für den Transistor 33, der dadurch gleichfalls leitend wird und die Teilnehmeranschlußleitung 11 mit der Betriebsspannung verbindet. Da bei einer Anfangseinschaltung des Systems der Kondensator 40 am Eingang des Stromwandlers 12 noch ungeladen ist, wird ein Einschaltstromstoß entstehen, durch den die Speiseschaltung 10 in einen Bereich negativen Innenwiderstands gesteuert wird. Der Emitterwiderstand 35 des Transistors 33 arbeitet dabei als Strommeßwiderstand, und die an ihm abfallende Spannung, die proportional dem Einschaltstromstoß ist, steuert über den Widerstand 36 den Transistor 34 leitend, wodurch dieser den zuvor an den Transistor 33 gelieferten Basisstrom übernimmt. Der Transistor 33 wird dadurch in den nichtleitenden Zustand gesteuert, was durch den mit dem Widerstand 37 verbundenen Mitkopplungseffekt begünstigt wird. Gleichzeitig ermöglichen die Widerstände 36, 37 und 38 einen geringen Stromfluß zur Teilnehmeranschlußleitung 11, durch den der Kondensator 40 am Eingang des Stromwandlers 12 langsam aufgeladen wird.

Wenn die Ladespannung des Kondensators 40, die die Eingangsspannung des Stromwandlers 12 ist, langsam ansteigt, so überschreitet die Emitterspannung des Transistors 43 die durch die Zenerdiode 42 festgelegte Referenzspannung, die an der Basis des Transistors 43 wirksam ist. Dadurch wird der Transistor 43 leitend und steuert seinerseits den Transistor 48 leitend, wodurch dieser über den Widerstand 49 und die Basis-Emitterdiode des Transistors 50 den Impulsgenerator 54 mit Strom versorgt. Der Impulsgenerator 54 erzeugt dann eine Impulsfolge fester Frequenz, die dem Pulsbreitenmodulator 55 zugeführt wird. Der Pulsbreitenmodulator 55 erhält aber an seinem Steuereingang 67 über den Widerstand 70 eine Gleichspannung, die an der RC-Reihenschaltung 68/69 abgegriffen ist, die an der Betriebsspannung des Impulsgenerators 54 liegt. Mit Durchschalten des Transistors 48 wird also gleichzeitig mit dem Einschalten des Impulsgenerators 54 eine langsam ansteigende Gleichspannung an den Steuereingang 67 des Pulsbreitenmodulators 55 geliefert, wodurch dieser die Impulsbreite der dem elektronischen Schalter 52 zugeführten Schaltimpulse schmal hält und nur entsprechend langsam breiter werden läßt. Dadurch wird verhindert, daß beim Anlaufen des Stromwandlers und dabei auftretendem hohem Energiebedarf auf der Sekundärseite die an sich eine große Impulsbreite veranlassenden Steuersignale, die von dem Widerstand 62 abgeleitet sind, zunächst nicht voll wirksam werden, sondern erst nach der mit der RC-Reihenschaltung 68/69 erzeugten Verzögerung. Damit ist gewährleistet, daß der Kondensator 40 beim Anlaufen des Stromwandlers 12 nicht zu stark entladen wird. Es ist zu erkennen, daß die Zeitkonstante der RC-Reihenschaltung 68/69 abhängig von der Größe des Kondensators 40 zu bemessen ist bzw. daß der Kondensator 40 bei Vorliegen einer entsprechend bemessenen Zeitkonstante relativ klein dimensioniert sein kann.

Da ein zu starkes Entladen des Kondensators 40 vermieden wird, kann auch kein Überstrom auf der Teilnehmeranschlußleitung 11 erzeugt werden, der die Speiseschaltung 10 in den Strombegrenzungsbetrieb steuern könnte.

Eine Maßnahme zur Verzögerung des Einsatzes der Regelung der Pulsbreite am Steuereingang 67 des Pulsbreitenmodulators 55 besteht darin, daß beim Anlauf des Stromwandlers 12 die am Ausgang 13 auftretende Gleichspannung über die Zenerdiode 63 in die Regelschleife eingespeist wird. Erst wenn die Zenerspannung der Zenerdiode 63 erreicht ist, kann die Ausgangsspannung über die Leitung 64 und den Optokoppler 65 als Regelgröße ausgewertet werden.

Der Widerstand 53, der mit dem elektronischen Schalter 52 in Reihe geschaltet ist, arbeitet als Strommeßwiderstand, und die an ihm abfallende Spannung wird über den elektronischen Schalter 75 dem Kondensator 74 periodisch zugeführt, an dem eine Gleichspannung entsteht, die über den Spannungsteiler 72/73 den Transistor 71 bei Erreichen eines vorbestimmten Wertes leitend steuert. Dadurch wird eine Begrenzung der Impulsbreite der von dem Pulsbreitenmodulator 55 abgegebenen Schaltimpulse bei Erreichen einer vorbestimmten Basisspannung des Transistors 71 erreicht. Dies führt wiederum zu einer Begrenzung des Stroms durch die Primärwicklung 51 des Wandlerübertragers 27, wodurch dessen magnetische Sättigung vermieden wird.

Die gesamte Regelschaltung wird im stationären Betrieb des Stromwandlers 12 aus der Sekundärwicklung 57 über die Gleichrichterschaltung 59/61 mit Strom versorgt, da der Transistor 50 leitend gesteuert ist. Der Transistor 48 muß dann nur noch den Basisstrom für den Transistor 50 liefern. Gleichzeitig liefert die Diode 47 über den Widerstand 46 eine von der Sekundärwicklung 57 abgeleitete Gleichspannung an den Emitter des Transistors 43, wodurch dieser leitend gesteuert bleibt, auch wenn die dem Stromwandler 12 zugeführte Eingangsspannung unter die beschriebene Schaltschwelle absinkt, die bei gesperrtem Zustand des Transistors 43 wirksam wird. Auf diese Weise bleibt der Stromwandler in Betrieb, wenn die ihm zugeführte Eingangsspannung stark absinkt. Der Effekt ist ein Hysterese-Schaltverhalten, d.h. eine gegenüber der Einschaltspannung geringere Ausschaltspannung des Stromwandlers 12. Dies sichert den kontinuierlichen Betrieb des Stromwandlers 12 mit vorgegebener Ausgangsspannung, auch wenn seine Eingangsspannung zum Beispiel durch Einflüsse auf der Teilnehmeranschlußleitung 11 oder durch wechselnde Schaltzustände in der Speiseschaltung 10 relativ stark veränderlich ist.

## Patentansprüche

1. Schaltungsanordnung für die Fernspeisung von Teilnehmeranschluß-Endgeräten in Fernmeldeanlagen, insbesondere Fernsprech-Nebenstellenanlagen, aus einer zentralen Stromquelle über eine Speiseschaltung (10) die Teilnehmeranschlußleitung, dadurch **gekennzeichnet,** daß dem Endgerät am Teilnehmeranschluß ein Stromwandler (12) mit einem primärseitigen, mit der Teilnehmeranschlußleitung (11) direkt verbundenen und die für einen Einschaltvorgang des Stromwandlers (12) erforderliche Energie liefernden Energiespeicher (40) vorgeschaltet ist und daß die Speiseschaltung (10) Komponenten enthält, die bei Überschreiten eines vorgegebenen Speisestromwertes eine Verringerung des Speisestroms durch Innenwiderstand sänderung bewirken.

2. Schaltungsanordnung nach Anspruch 1, dadurch **gekennzeichnet,** daß ein Schaltstromwandler (12) mit ausgangsspannungsabhängiger Regelung seiner Schaltcharakteristik vorgesehen ist, wobei die Bildung der Steuergröße für die Regelung bei Einschalten des Schaltstromwandlers (12) mit einer Anstiegsflanke endlicher Steigung erfolgt, die so bemessen ist, daß der vorgegebene Speisestromwert nicht überschritten wird.

3. Schaltungsanordnung nach Anspruch 2, dadurch **gekennzeichnet,** daß zur Regelung der Schaltcharakteristik eine spannungsgesteuerte Pulsbreitenmodulation der Schaltimpulse für den primärseitigen Schaltstromkreis (51, 52, 53) des Schaltstromwandlers (12) erfolgt und daß der Steuerstromkreis für die Spannungssteuerung einen RC-Verzögerungsstromzweig (68, 69) aufweist.

4. Schaltungsanordnung nach Anspruch 3, dadurch **gekennzeichnet,** daß der Steuerstromkreis ferner einen die Pulsbreitenmodulation auf eine vorgegebene maximale Pulsbreite begrenzenden Stromzweig (71 bis 75) aufweist.

5. Schaltungsanordnung nach einem der Ansprüche 2 bis 4, dadurch **gekennzeichnet,** daß der Schaltstromwandler (12) primärseitig eine an der Eingangsspannung liegende Schwellenschaltung (41, 42, 43) enthält, deren Schaltschwelle das Einschaltkriterium für die primärseitigen Schaltimpulse ist.

6. Schaltungsanordnung nach Anspruch 5, dadurch **gekennzeichnet,** daß die Schwellenschaltung (41, 42, 43) durch einen an seiner Basis durch eine Referenzspannung beaufschlagten Schalttransistor (43) gebildet ist, der eine Steuerspannung zum Einschalten eines die Schaltimpulse liefernden Impulsgenerators (54) abgibt.

7. Schaltungsanordnung nach Anspruch 6, dadurch **gekennzeichnet,** daß der mit der Referenzspannung beaufschlagte Schalttransistor (43) zusätzlich mit einer aus dem Speisestrom des Impulsgenerators (54) abgeleiteten, seinen Einschaltzustand aufrecht erhaltenden Betriebsspannung beaufschlagt ist.

8. Schaltungsanordnung nach Anspruch 6 oder 7, dadurch **gekennzeichnet,** daß der Speisestrom für den Impulsgenerator (54) von der Sekundärseite des Schaltstromwandlers (12) abgeleitet ist.

9. Schaltungsanordnung nach einem der vorhergehenden Ansprüche, dadurch **gekennzeichnet,** daß die Speiseschaltung (10) einen in den Stromverlauf von der zentralen Stromquelle zur Teilnehmeranschlußleitung (11) eingeschleiften Transistor (33) mit in Reihe geschaltetem Strommeßwiderstand (35) enthält, dessen Basiselektrode ein Einschaltkriterium zuführbar ist, der durch die am Strommeßwiderstand (35) abfallende Spannung sperrbar ist und dessen Emitter-Kollektorstrecke ein ohmscher Widerstand (38) mit gegenüber seinem Innenwiderstand größerem Widerstandswert parallelgeschaltet ist.

**10.** Schaltungsanordnung nach Anspruch 9, dadurch **ge**kennzeichnet, daß der Transistor (33) in Mitkopplungsschaltung betrieben ist.

## Claims

**1.** A circuit for the remote supply to subscriber line terminals in telecommunication systems, especially in subscriber's extension stations, from a central current source via a supply circuit (10) and the subscriber line, **characterized** in that the terminal is preceded at the subscriber connection by a current converter (12) having a primary side energy reservoir (40) directly connected to the subscriber line (11) and delivering the energy required for a switch-on operation of the current converter (12), and that the supply circuit (10) comprises components (29, 32, 33, 34, 36, 37, 38) which, when a predetermined value of the supply current is exceeded, cause a reduction of the supply current by a change in the internal resistance.

**2.** A circuit according to claim 1, **characterized** in that a switched current converter (12) having an output-voltage dependent control of its switch characteristic is provided, wherein the parameter for control when the switched current converter (12) switches on is being formed with a rising edge of finite slope dimensioned such that the predetermined supply current value is not exceeded.

**3.** A circuit according to claim 2, **characterized** in that, for control of the switch characteristic, a voltage-controlled pulse width modulation of the switch pulses is performed for the primary side switched circuit (51, 52, 53) of the switched current converter (12), and that the control circuit for voltage control has an RC delay circuit (68, 69).

**4.** A circuit according to claim 3 **characterized** in that the control circuit further includes a current branch (71 to 75) limiting the pulse width modulation to a predetermined maximum pulse width.

**5.** A circuit according to any one of claims 2 to 4, **characterized** in that the switched current converter (12) comprises a threshold circuit (41, 42, 43) fed with the primary input voltage, whose threshold is the switch-on criterion for the primary switch pulses.

**6.** A circuit according to claim 51 **characterized** in that the threshold circuit (41, 42, 43) is formed by a switch transistor (43) fed with a reference voltage at its base and supplying a control voltage to switch on a pulse generator (54) delivering the switch pulses.

**7.** A circuit according to claim 6, **characterized** in that the switch transistor (43) fed with the reference voltage is additionally fed with an operating voltage derived from the supply current of the pulse generator (54) and maintaining its switch-on condition.

**8.** A circuit according to claim 6 or 7, **characterized** in that the supply current for the pulse generator (54) is derived from the secondary side of the switched current converter (12).

**9.** A circuit according to any one of the foregoing claims, **characterized** in that the supply circuit (10) comprises a transistor (33) in the current path from the central current source to the subscriber line (11) in series with a current sensing resistor (35), the base electrode of which can be fed with a switch-on criterion, said transistor being capable of being blocked by the voltage drop at the current sensing resistor (35) and having an emitter-collector junction with an ohmic resistor (38) of higher resistance than its internal resistance in parallel thereto.

**10.** A circuit according to claim 9, **characterized** in that the transistor (33) is operated in regenerative feedback mode.

## Revendications

**1.** Circuit pour l'alimentation à distance d'appareils terminaux de raccordement d'abonné dans des installations téléphoniques, en particulier dans des installations de postes téléphoniques supplémentaires, à partir d'une source de courant centrale au moyen d'un circuit d'alimentation (10) et de la ligne de raccordement d'abonné, caractérisé en ce qu'est monté en amont du poste terminal de raccordement d'abonné un transformateur d'intensité (12) avec un accumulateur d'énergie (40) du côté primaire, relié directement à la ligne (11) de raccordement d'abonné et fournissant l'énergie nécessaire à une opération d'enclenchement du transformateur d'intensité (12), et en ce que le circuit d'alimentation (10) contient des composants (29,32, 33,34,36,37,38) qui, en cas de dépassement d'une valeur prédéfinie du courant d'alimentation, provoquent une diminution du courant d'alimentation par modification de la résistance interne.

2. Circuit selon la revendication 1 caractérisé en ce qu'il est prévu un transformateur du courant de commutation (12) à régulation en fonction de la tension de sortie de sa caractéristique de commutation, par lequel la formation de la grandeur de commande pour la régulation lors de l'enclenchement du transformateur de courant de commutation (12) s'effectue avec un flanc de montée dont la pente terminale est dimensionnée de telle façon que la valeur prédéfinie du courant d'alimentation n'est pas dépassée.

3. Circuit selon la revendication 2 caractérisé en ce que, pour la régulation de la caractéristique de commutation, il est effectué une modulation en largeur des impulsions de commutation pour le circuit de commutation du côté primaire (51, 52, 53) du transformateur du courant de commutation (12) et en ce que le circuit de commande pour la commande de la tension comprend un circuit retardateur en dérivation R-C (68,69).

4. Circuit selon la revendication 3 caractérisé en ce que le circuit de commande comprend en plus une branche en dérivation (71 à 75) limitant la modulation en largeur des impulsions à une largeur maximale prédéfinie d'impulsion.

5. Circuit selon une quelconque des revendications 2 à 4 caractérisé en ce que le transformateur de courant de commutation (12) contient du côté primaire une branche à seuil (41, 42, 43) mise à la tension d'entrée dont le seuil de commutation est le critère d'enclenchement pour les impulsions de commutation du côté primaire.

6. Circuit selon la revendication 5 caractérisé en ce que la branche à seuil (41, 42, 43) est constituée par un transistor de commutation (43) qui est alimenté à sa base par une tension de référence et qui délivre une tension de commande pour l'enclenchement d'un générateur d'impulsions (54) fournissant les impulsions de commutation.

7. Circuit selon la revendication 6 caractérisé en ce que le transistor de commutation (43) alimenté en tension de référence est alimenté en plus en une tension de service dérivée du courant d'alimentation du générateur d'impulsions (54), et le tenant à son état d'enclenchement.

8. Circuit selon la revendication 6 ou la revendication 7 caractérisé en ce que le courant d'alimentation pour le générateur d'impulsions (54) est dérivé du côté secondaire du transformateur du courant de commutation (12).

9. Circuit selon une quelconque des revendications précédentes, caractérisé en ce que le circuit d'alimentation (10) contient un transistor (33) monté en série avec une résistance chutrice (35) et placé sur le parcours du courant de la source de courant centrale à la ligne de raccordement d'abonné (11), à l'électrode de base duquel peut être fourni un critère d'enclenchement, transistor qui peut être bloqué par la tension chutant à la résistance chutrice (35), et à la branche émetteur-collecteur duquel peut être montée en parallèle une résistance ohmique (38) dont la valeur est supérieure à sa résistance interne.

10. Circuit selon la revendication 9 caractérisé en ce que le transistor (33) est utilisé dans un circuit à rétroaction positive.